# EUROPÄISCHE PATENTSCHRIFT

(11) **EP 3 954 849 B1**
(45) Veröffentlichungstag und Bekanntmachung des Hinweises auf die Patenterteilung: **04.06.2025**
(21) Anmeldenummer: 21190590.6
(22) Anmeldetag: 10.08.2021
(51) Int. Cl.: E05C 3/04, B62H 5/00, B62J 9/30, B62J 11/00, B62J 43/13, B62M 6/90, E05B 29/00, E05B 71/00, B62J 9/14

(54) **SCHLIESSZYLINDER FÜR EIN AUFBEWAHRUNGSFACH**
LOCKING CYLINDER FOR A STORAGE COMPARTMENT
CYLINDRE DE FERMETURE POUR UN COMPARTIMENT DE RANGEMENT

(30) Priorität: 13.08.2020 DE 102020121368
(43) Veröffentlichungstag der Anmeldung: 16.02.2022
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- EP-A1- 2 500 246
- DE-A1- 102005 014 899
- FR-A1- 2 386 670
- GB-A- 2 432 881
- US-B1- 6 523 381

## Beschreibung

Die Erfindung betrifft ein verriegelbares Aufbewahrungsfach, insbesondere Batteriefach eines Elektrofahrrads, mit einem Schließzylinder, gemäß dem Oberbegriff des Anspruchs 1.

Bei einem elektrisch angetriebenen Fahrrad, insbesondere einem sogenannten E-Bike oder Pedelec, ist üblicherweise ein austauschbarer Akkumulator vorgesehen, also eine wiederaufladbare elektrische Batterie. Ein derartiger Akkumulator kann beispielsweise an einem Gepäckträger oder an einem Rahmenrohr des Elektrofahrrads angeordnet sein. Um den Akkumulator gegen Diebstahl zu sichern, kann der Akkumulator in einem verriegelbaren Aufbewahrungsfach untergebracht sein, welches an einer Wand eine Zugriffsöffnung aufweist, durch welche hindurch auf den Akkumulator zugegriffen werden kann. Die Zugriffsöffnung kann mittels eines Deckels wahlweise verschlossen werden. Der Deckel kann beweglich sein, beispielsweise schwenkbar nach Art einer Klappe oder verschiebbar oder vollständig lösbar.

Das Aufbewahrungsfach und der Deckel können generell vielfältige Formen annehmen, beispielsweise um eine im Wesentlichen geschlossene Umhüllung zu bilden oder um den Innenraum des Aufbewahrungsfachs lediglich käfigartig, also mit verbleibenden Öffnungen, zu umgeben. Bei der Anwendung bei einem Elektrofahrrad kann das Aufbewahrungsfach auch als Batteriefach bezeichnet werden, und das Aufbewahrungsfach kann auch teilweise oder vollständig in den Rahmen des Fahrrads integriert sein.

Um den geschlossenen Deckel des Aufbewahrungsfachs verriegeln zu können, kann ein Schließzylinder vorgesehen sein, der mittels eines Schlüssels betätigbar ist.

Bei vielen Anwendungen, insbesondere auch bei einem Batteriefach eines Elektrofahrrads, besteht das Problem eines begrenzten zur Verfügung stehenden Bauraums für den Verriegelungsmechanismus. Hierdurch kann es schwierig sein, einen Verriegelungsmechanismus mit Schließzylinder, welcher eine gewisse axiale Länge und radiale Erstreckung besitzt, unterzubringen. Speziell bei einem Batteriefach eines Elektrofahrrads besteht das zusätzliche Problem, dass der Schließzylinder außenseitig nicht über die Einbauumgebung überstehen soll, um keine Verletzungsgefahr für den Benutzer zu bilden. Die Batteriefächer von Elektrofahrrädern besitzen oftmals eine dünne Wandstärke, so dass sich zwangsläufig ein gewisser axialer Überstand des Schließzylinders in den Innenraum hinein ergibt.

DE 10 2005 014 899 A1 zeigt ein Aufbewahrungsfach gemäß dem Oberbegriff des Anspruchs 1. FR 2 386 670 A1, GB 2 432 881 A, US 6 523 381 B1 und EP 2 500 246 A1 zeigen ähnliche Aufbewahrungsfächer und/oder Schließzylinder hierfür.

Es ist eine Aufgabe der Erfindung, ein verriegelbares Aufbewahrungsfach, insbesondere ein Batteriefach eines Elektrofahrrads, mit einem Schließzylinder anzugeben, das dem Benutzer bei der Betätigung des Schließzylinders eine haptische Rückmeldung über das Erreichen einer Verriegelungsstellung des Riegels und eine mechanische Stabilisierung des Riegels in der Verriegelungsstellung ermöglicht.

Diese Aufgabe wird durch ein Aufbewahrungsfach mit den Merkmalen des Anspruchs 1 gelöst.

Die Erfindung bezieht sich somit auf ein verriegelbares Aufbewahrungsfach, insbesondere ein Batteriefach eines Elektrofahrrads, welches wenigstens eine Wand mit einer Zugriffsöffnung, ferner einen beweglichen Deckel zum Verschließen der Zugriffsöffnung, und einen Schließzylinder zum Verriegeln des Deckels aufweist.

Der Schließzylinder des Aufbewahrungsfachs weist erfindungsgemäß ein Zylindergehäuse, einen Rotor und einen Riegel auf. Der Rotor ist in dem Zylindergehäuse um eine Zylinderachse drehbar gelagert. An seiner Rückseite des Schließzylinders weist der Rotor einen Antriebsabschnitt auf, an dem der Riegel drehfest montiert ist. Der Riegel steht bezüglich der Zylinderachse in radialer Richtung über das Zylindergehäuse über. Ausgehend von dem Antriebsabschnitt des Rotors ist der Riegel in Richtung der Vorderseite des Schließzylinders abgewinkelt.

Der Schließzylinder ist erfindungsgemäß an dem beweglichen Deckel des Aufbewahrungsfachs montiert, um den Deckel in einer Geschlossenstellung, in welcher der Deckel eine Zugriffsöffnung des Aufbewahrungsfachs verschließt, wahlweise verriegeln oder entriegeln zu können. An seiner Vorderseite kann der Schließzylinder eine Schlüsseleinführöffnung aufweisen, um einen zugeordneten Schlüssel einführen zu können. Durch Drehbetätigung des Rotors mittels des zugeordneten Schlüssels kann der Riegel unmittelbar zwischen einer Verriegelungsstellung und einer Entriegelungsstellung verschwenkt werden. In der Verriegelungsstellung hintergreift der Riegel mit seinem freien Ende einen seitlich benachbarten Wandabschnitt des Aufbewahrungsfachs, um den Deckel gegen ein Öffnen zu sperren. In der Entriegelungsstellung kann der Riegel von der umgebenden Wand des Aufbewahrungsfachs weg geschwenkt bzw. in Flucht zu einem Abschnitt des Deckels gebracht werden, um ein Öffnen oder Entfernen des Deckels zu ermöglichen.

Der Schließzylinder weist also einen Riegel auf, der mit dem Rotor fest verbunden ist und der sich ausgehend von dem rückseitigen Antriebsabschnitt des Rotors nicht lediglich in radialer Richtung bezüglich der Zylinderachse erstreckt, sondern auch in Richtung der Vorderseite des Schließzylinders. Insgesamt ergibt sich hierdurch eine abgewinkelte Form des Riegels, die im Vergleich zu einem nur in Querrichtung verlaufenden Riegel relativ nahe entlang des Zylindergehäuses bis zu demjenigen Bereich - insbesondere bis zu dem benachbarten Wandabschnitt des Aufbewahrungsfachs - verläuft, an dem der Riegel seine Verriegelungsfunktion erfüllen soll. Somit wird für den Verriegelungsmechanismus (Schließzylinder mit Riegel) in der Umgebung des Schließzylinders nur ein minimaler Bauraum für die Bewegungsbahn des Riegels benötigt. Ferner kann durch eine derartige Ausgestaltung des Schließzylinders bei optionalen Ausführungsformen erreicht werden, dass die Befestigungsebene des Schließzylinders nahe der Vorderseite des Schließzylinders liegt und der Schließzylinder somit allenfalls geringfügig über die Befestigungsebene übersteht, wobei der Riegel sich innerhalb des bis Aufbewahrungsfachs bis nahe der Befestigungsebene erstrecken kann, um dort einen benachbarten Wandabschnitt des Aufbewahrungsfachs hintergreifen zu können.

Im Folgenden werden verschiedene Ausführungsformen erläutert, die auch in vorteilhafter Weise miteinander kombiniert werden können.

Bei einigen Ausführungsformen kann das Zylindergehäuse entlang der Zylinderachse eine bestimmte Längserstreckung aufweisen, wobei der Riegel ausgehend von dem Antriebsabschnitt des Rotors sich entlang des Zylindergehäuses über zumindest 60%, insbesondere über zumindest 70% oder 80%, der Längserstreckung des Zylindergehäuses in Richtung der Vorderseite des Schließzylinders erstreckt.

Bei einigen Ausführungsformen kann der Schließzylinder an seiner Vorderseite einen Anschlagbund aufweisen, welcher dazu ausgebildet ist, im montierten Zustand des Schließzylinders an einer Außenseite des Deckels des Aufbewahrungsfachs anzuliegen, wobei der Schließzylinder ferner ein Sicherungselement, insbesondere eine Sicherungsmutter oder einen Sprengring, aufweist, welches dazu ausgebildet ist, im montierten Zustand des Schließzylinders an einer Innenseite des Deckels des Aufbewahrungsfachs anzuliegen, um den Schließzylinder an dem Deckel festzulegen. Bei derartigen Ausführungsformen kann der Riegel ausgehend von dem Antriebsabschnitt des Rotors entlang der Zylinderachse zumindest bis auf Höhe des Sicherungselements, oder sogar bis auf Höhe des Anschlagbunds des Schließzylinders (angrenzend oder überlappend), ragen.

Bei den vorgenannten Ausführungsformen kann der Riegel also eine weitreichende axiale Erstreckung entlang der Zylinderachse in Richtung der Vorderseite des Schließzylinders aufweisen, um dort mit seinem freien Ende die erforderliche Verriegelungsfunktion zu erfüllen, wobei für die Schwenkbewegung des Riegels (zwischen der Verriegelungsstellung und der Entriegelungsstellung) im rückseitigen Bereich des Schließzylinders nur wenig radialer Bauraum benötigt wird.

Erfindungsgemäß ist der Riegel gekröpft und weist ausgehend von dem Antriebsabschnitt des Rotors einen Befestigungsabschnitt, mit dem der Riegel an dem Antriebsabschnitt befestigt ist; ferner einen entlang der Zylinderachse verlaufenden und bezüglich der Zylinderachse schräg ausgerichteten Verbindungsabschnitt; und an seinem freien Ende einen Verriegelungsabschnitt für die erforderliche Verriegelungsfunktion auf. Der Verriegelungsabschnitt erstreckt sich senkrecht zu der Zylinderachse. Der Verriegelungsabschnitt weist - wie nachfolgend noch erläutert wird - eine Einrasterhebung auf.

Der Befestigungsabschnitt des Riegels kann bezüglich der Drehbewegung um die Zylinderachse formschlüssig mit dem Antriebsabschnitt des Rotors verbunden sein. Hierdurch wird erreicht, dass der Riegel für die Schwenkbewegung (zwischen der Verriegelungsstellung und der Entriegelungsstellung) stabil an dem Rotor festgelegt ist. Der Befestigungsabschnitt des Riegels kann hierbei insbesondere mittels einer axial ausgerichteten Befestigungsschraube an dem Antriebsabschnitt fixiert sein, um auch eine stabile axiale Fixierung zu bewirken.

Bei einigen Ausführungsformen kann der Riegel zwischen dem Befestigungsabschnitt und dem Verbindungsabschnitt, und/oder zwischen dem Verbindungsabschnitt und dem Verriegelungsabschnitt eine jeweilige Versteifungssicke aufweisen. Hierdurch wird trotz der abgewinkelten Form des Riegels eine hohe Stabilität erreicht, insbesondere bezüglich axialer Belastungen (d.h. entlang der Zylinderachse) im Falle eines gewaltsamen Öffnungsversuchs an dem Aufbewahrungsfach bzw. dem Deckel.

Der Verriegelungsabschnitt des Riegels weist erfindungsgemäß eine Einrasterhebung auf. Hierdurch kann auf einfache Weise ein Rastschluss des Riegels mit der Einbauumgebung bewirkt werden, wenn der Riegel sich in einer Endstellung befindet, insbesondere in der Verriegelungsstellung oder in der Entriegelungsstellung. Somit kann der Benutzer bei der Betätigung des Schließzylinders eine haptische Rückmeldung über das Erreichen der jeweiligen Endstellung des Riegels erhalten, und der Riegel kann in einer bestimmten Stellung mechanisch stabilisiert sein, beispielsweise in einer Null-Stellung des Schließzylinders, um den zugeordneten Schlüssel leichtgängig aus dem Schließzylinder entnehmen zu können.

Der Riegel kann infolge seiner abgewinkelten Form eine solche Eigenelastizität aufweisen, die eine ausreichende temporäre Auslenkung und somit Vorspannung entlang der Zylinderachse ermöglicht, damit der Verriegelungsabschnitt des Riegels einen Rastschluss mit der Einbauumgebung eingehen kann.

Das Aufbewahrungsfach weist erfindungsgemäß innenseitig eine zu der Einrasterhebung des Riegels komplementäre Vertiefung für den Rastschluss mit dem Riegel auf.

Der Riegel kann insbesondere infolge einer Schwenkbewegung nach Erreichen der Verriegelungsstellung in die komplementäre Vertiefung an der Innenseite des Aufbewahrungsfachs einrasten. Im Falle der Einrasterhebung kann der Riegel während der Schwenkbewegung infolge einer gewissen Vorspannung die Innenseite des Aufbewahrungsfachs mit einer gewissen Anpresskraft beaufschlagen.

Die Einrasterhebung des Riegels bildet eine Erhebung entlang der Zylinderachse.

Die Einrasterhebung bildet erfindungsgemäß eine in Richtung der Vorderseite des Schließzylinders konvexe Erhebung relativ zu einer Grundfläche des Verriegelungsabschnitts.

Bei einigen Ausführungsformen kann die Einrasterhebung eine Längsform aufweist, die entlang einer radialen Richtung bezüglich der Zylinderachse verläuft. Eine solche Form und Ausrichtung der Einrasterhebung sind an dem länglichen Riegel fertigungstechnisch mit geringen Toleranzen einfach zu bewerkstelligen.

Was die weitere Ausgestaltung des Schließzylinders betrifft, so kann der Rotor einen Schlüsselkanal mit einer vorderseitigen Schlüsseleinführöffnung aufweisen. Der Schließzylinder kann generell nach unterschiedlichen Schließprinzipien aufgebaut sein.

Besonders vorteilhaft ist in Kombination mit dem abgewinkelten Riegel eine Ausführungsform, bei welcher der Schließzylinder ein Scheibenzylinder ist, der entlang der Zylinderachse mehrere um die Zylinderachse drehbare Scheibenzuhaltungen und einen parallel zur Zylinderachse ausgerichteten und radial zur Zylinderachse versetzbaren Sperrstift aufweist, wobei jede Scheibenzuhaltung eine zentrale Aufnahmeöffnung zur Aufnahme des zugeordneten Schlüssels und eine Umfangsausnehmung zur Aufnahme des Sperrstifts aufweist. Bei einem derartigen Schließzylinder sind die einzelnen Zuhaltungen als flache, entlang der Zylinderachse dicht hintereinander angeordnete Scheiben ausgebildet, so dass der Schließzylinder eine kurze axiale Baulänge aufweisen kann. Der Zylinder ragt somit nur minimal in den Innenraum des Aufbewahrungsfachs hinein, und der abgewinkelte Teil des Riegels - insbesondere der genannte Verbindungsabschnitt - kann eine entsprechend kurze Länge mit hoher Stabilität besitzen.

Bei einem derartigen Scheibenzylinder kann der Sperrstift in einer radial äußeren Blockierstellung den Rotor gegen eine Drehbewegung blockieren und in einer radial inneren Freigabestellung den Rotor für eine Drehbewegung freigeben, wobei die Scheibenzuhaltungen zwischen einer Verriegelungsstellung und einer Entriegelungsstellung drehbar sind, und wobei der Sperrstift nur dann in die Freigabestellung versetzbar ist, wenn sich (nach einem Sortieren der Scheibenzuhaltungen mittels des zugeordneten Schlüssels) alle Scheibenzuhaltungen in ihrer Entriegelungsstellung befinden, in welcher die Umfangsausnehmung der jeweiligen Scheibenzuhaltung radial zu dem Sperrstift ausgerichtet ist.

Wie erläutert können das Aufbewahrungsfach und der Deckel vielfältige Formen annehmen (beispielsweise geschlossen oder gitterartig) und zumindest teilweise in eine weitere Einbauumgebung (beispielsweise Fahrradrahmen) integriert sein.

Bei einigen Ausführungsformen kann das Zylindergehäuse einen nicht kreisrunden Querschnitt aufweisen, an dem der Schließzylinder in dem Deckel formschlüssig und somit drehfest gehalten werden kann. Insbesondere kann das Zylindergehäuse zumindest an einem axialen Abschnitt nahe der Vorderseite des Schließzylinders zweiseitig abgeflacht sein.

Bei einigen Ausführungsformen können an einer Außenseite des Aufbewahrungsfachs die Wand und der Deckel sich entlang einer zwischen der Wand und dem Deckel gebildeten Trennfuge koplanar in einer gemeinsamen (planen oder gekrümmten) Erstreckungsebene erstrecken, wobei der Deckel einen Befestigungsabschnitt mit einer Befestigungsöffnung aufweist, in welcher der Schließzylinder aufgenommen ist. Bei derartigen Ausführungsformen kann der Befestigungsabschnitt des Deckels gegenüber der gemeinsamen Erstreckungsebene von Wand und Deckel derart vertieft sein, dass die Vorderseite des Schließzylinders im Wesentlichen bündig zu der gemeinsamen Erstreckungsebene von Wand und Deckel angeordnet ist. Hierdurch ist eine Verletzungsgefahr durch den an der Außenseite des Aufbewahrungsfachs überstehenden Teil des Schließzylinders minimiert.

Das Aufbewahrungsfach weist erfindungsgemäß an seiner Innenseite eine Vertiefung für einen Eingriff mit dem Riegel auf. Hierdurch kann der Riegel in der Verriegelungsstellung mit der Vertiefung in Eingriff gelangen und somit in der Endstellung stabilisiert sein. Somit ist an der Innenseite des Aufbewahrungsfachs ein Rastschluss mit der genannten Einrasterhebung vorgesehen, die an dem freien Ende des Riegels ausgebildet ist.

An der Innenseite des Aufbewahrungsfachs können die Wand und der Deckel sich entlang einer zwischen der Wand und dem Deckel gebildeten Trennfuge koplanar in einer gemeinsamen Erstreckungsebene erstrecken, zumindest im Bereich der Bewegungsbahn des Riegels. Der Riegel kann somit selbst im Falle einer Vorspannung in Richtung der Vorderseite des Schließzylinders und einer entsprechenden Kraftbeaufschlagung der Innenseite des Aufbewahrungsfachs die Trennfuge in beiden Richtungen problemlos überstreichen.

Die Erfindung bezieht sich auch auf ein Elektrofahrrad mit einem verriegelbaren Aufbewahrungsfach der erläuterten Art.

Nachfolgend wird die Erfindung beispielhaft anhand der Zeichnungen erläutert, wobei gleiche oder gleichartige Elemente mit denselben Bezugszeichen gekennzeichnet sind.
- Fig. 1: zeigt eine schematische Seitenansicht eines Elektrofahrrads.
- Fig. 2: zeigt eine perspektivische Ansicht des Innenraums eines Aufbewahrungsfachs mit einem Schließzylinder in der Verriegelungsstellung.
- Fig. 3: zeigt eine perspektivische Ansicht der Außenseite des Aufbewahrungsfachs gemäß Fig. 2.
- Fig. 4 bis 6: zeigen eine erste Ausführungsform eines Schließzylinders in einer Seitenansicht, einer perspektivischen Ansicht bzw. einer Unteransicht (keine Ausführungsform der Erfindung).
- Fig. 7: zeigt den Schließzylinder in einer perspektivischen Unteransicht bei gelöstem Riegel (keine Ausführungsform der Erfindung).
- Fig. 8: zeigt den Schließzylinder in einer Schnittdarstellung (keine Ausführungsform der Erfindung).
- Fig. 9: zeigt Teile des Schließzylinders in einer Explosionsdarstellung (keine Ausführungsform der Erfindung).
- Fig. 10 und 11: zeigen Perspektivansichten eines Riegels einer erfindungsgemäßen zweiten Ausführungsform des Schließzylinders.
- Fig. 12: zeigt die Innenseite eines Wandabschnitts des Aufbewahrungsfachs ohne Deckel.
- Fig. 13: zeigt eine Schnittdarstellung des Aufbewahrungsfachs bei verriegeltem Deckel.
- Fig. 14: zeigt eine perspektivische Ansicht der Innenseite des Deckels des Aufbewahrungsfachs ohne Schließzylinder.

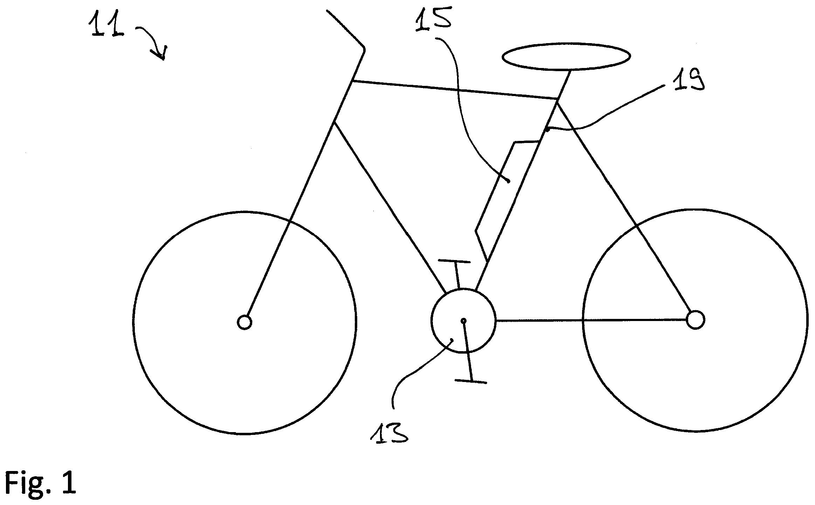

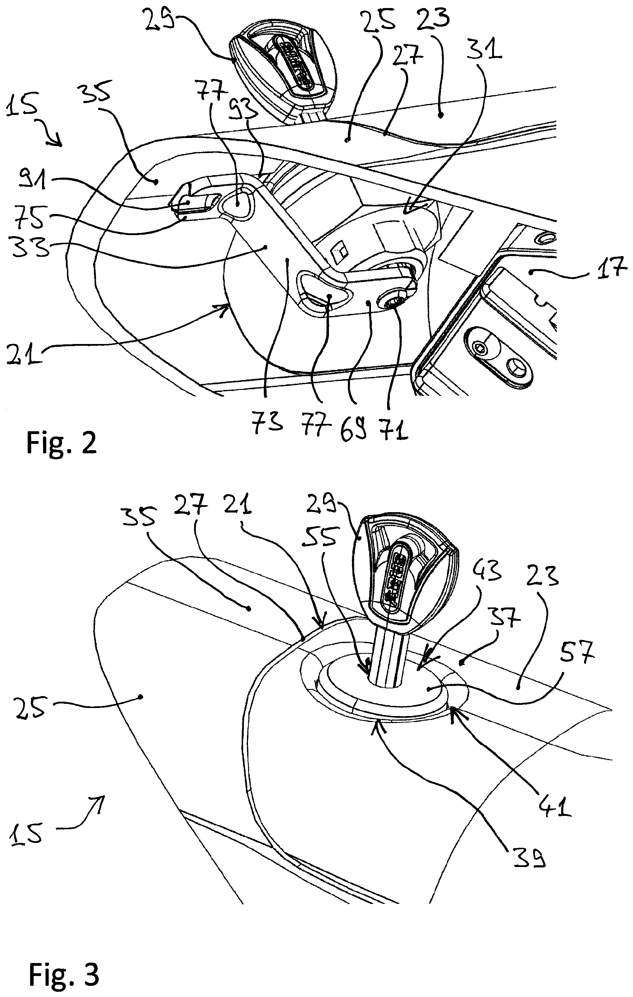

In Fig. 1 ist ein Elektrofahrrad 11 gezeigt, das für einen beispielsweise am Tretlager 13 angeordneten Elektroantrieb einen elektrischen Energiespeicher in Form eines Akkumulators 17 (Fig. 2) aufweist, der in einem verriegelbaren Aufbewahrungsfach 15 untergebracht ist. Das Aufbewahrungsfach 15 bildet somit ein sogenanntes Batteriefach, und es kann beispielsweise an einem Rahmenabschnitt 19 des Elektrofahrrads 11 angeordnet sein. Das Aufbewahrungsfach 15 muss nicht unbedingt eine in sich vollständig geschlossene Umhüllung bilden, sondern kann auch teilweise oder vollständig in den Rahmenabschnitt 19 integriert sein.

Beispielsweise kann das Aufbewahrungsfach 15 nach Art einer Haube ausgebildet sein, die den Akkumulator 17 an mehreren Seiten umgibt und mit einer offenen Unterseite an dem Rahmenabschnitt 19 montiert ist. Ein derartiges Aufbewahrungsfach 15 ist in Fig. 2 und 3 gezeigt, wobei das Aufbewahrungsfach 15 von dem Rahmenabschnitt 19 gelöst ist und in Fig. 2 die Betrachtungsrichtung von unten in den Innenraum des Aufbewahrungsfachs 15 weist. Fig. 3 zeigt die Außenseite des Aufbewahrungsfachs 15. Das Aufbewahrungsfach 15 besitzt bei diesem Ausführungsbeispiel also die Form eines unterseitig offenen Gehäuses.

Das Aufbewahrungsfach 15 weist eine Zugriffsöffnung 21 auf, die durch einen beweglichen Deckel 23 verschlossen ist. Zwischen dem gewölbten Deckel 23 und der gewölbten Wand 25 des Aufbewahrungsfachs 15 verläuft eine Trennfuge 27. Bei geöffnetem oder entferntem Deckel 23 kann über die Zugriffsöffnung 21 der Akkumulator 17 entfernt oder eingesetzt werden.

Mittels eines durch einen Schlüssel 29 drehbetätigbaren Schließzylinders 31 kann der Deckel 23 in der in Fig. 2 und 3 gezeigten geschlossenen Stellung verriegelt werden. Hierfür weist der Schließzylinder 31 einen Riegel 33 auf, der an der Innenseite eines zu dem Deckel 23 benachbarten Wandabschnitts 35 des Aufbewahrungsfachs 15 anliegt.

Wie aus Fig. 3 ersichtlich ist, erstrecken die Wand 25 und der Deckel 23 sich an der gezeigten Oberseite des Aufbewahrungsfachs 15 entlang der Trennfuge 27 koplanar zueinander, wobei der Deckel 23 einen Befestigungsabschnitt 37 mit einer Befestigungsöffnung 39 aufweist, in welcher der Schließzylinder 31 aufgenommen ist. Der Deckel 23 besitzt an dem Befestigungsabschnitt 37 eine Vertiefung 41, in welcher die Befestigungsöffnung 39 angeordnet ist und an welcher der Schließzylinder 31 derart montiert ist, dass die in Fig. 3 ersichtliche Vorderseite 43 des Schließzylinders 31 im Wesentlichen bündig zu der gemeinsamen Erstreckungsebene der Wand 25 und des Deckels 23 an der Oberseite des Aufbewahrungsfachs 15 angeordnet ist.

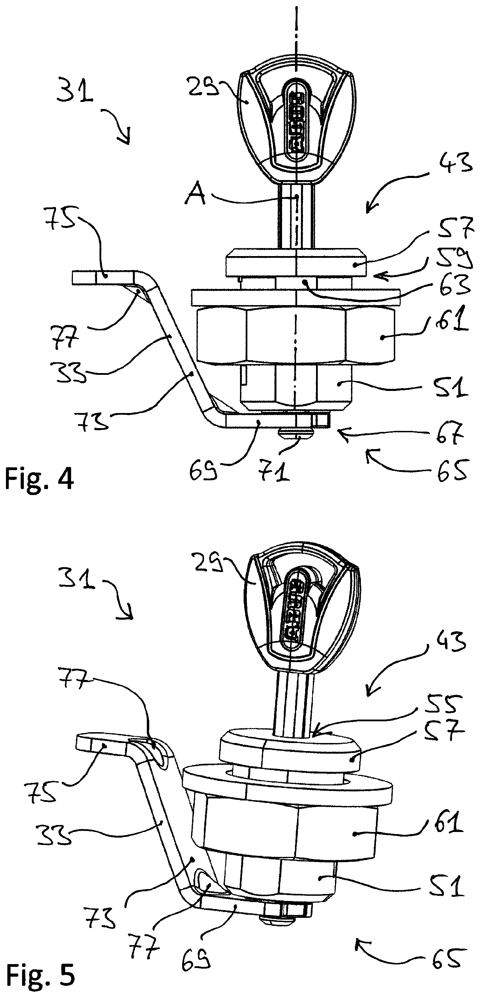

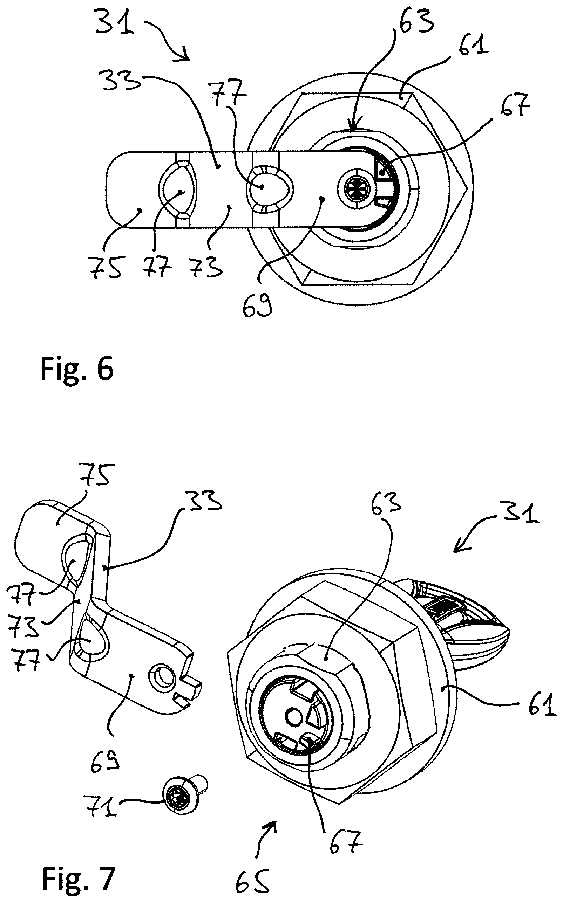

Anhand der Fig. 4 bis 9 wird nun der Schließzylinder 31 gemäß einer ersten Ausführungsform näher erläutert (keine Ausführungsform der Erfindung).

Der Schließzylinder 31 weist ein Zylindergehäuse 51 und einen in dem Zylindergehäuse 51 um eine Zylinderachse A drehbar gelagerten Rotor 53 auf. An der Vorderseite 43 weist der Schließzylinder 31 eine Schlüsseleinführöffnung 55 auf, durch die der zugeordnete Schlüssel 29 eingeführt werden kann, um den Rotor 53 relativ zu dem Zylindergehäuse 51 drehen zu können. Zur Befestigung des Schließzylinders 31 an dem Befestigungsabschnitt 37 des Deckels 23 (Fig. 3) weist der Schließzylinder 31 an seiner Vorderseite 43 einen von einer Zylinderkappe 57 überdeckten Anschlagbund 59 auf, welcher im montierten Zustand des Schließzylinders 31 innerhalb der Vertiefung 41 (Fig. 3) an der Außenseite des Deckels 23 anliegt. Ferner weist der Schließzylinder ein Sicherungselement in Form einer Sicherungsmutter 61 auf, die im montierten Zustand des Schließzylinders 31 an der Innenseite des Deckels 23 anliegt (Fig. 2), um den Schließzylinder 31 an dem Deckel 23 festzulegen. Das Zylindergehäuse 57 weist umfänglich verteilt zwei Abflachungen 63 auf, an denen der Schließzylinder 31 in der Befestigungsöffnung 39 des Deckels 23 (Fig. 3) formschlüssig und somit drehfest gehalten ist.

Der Rotor 53 weist an der Rückseite 65 des Schließzylinders 31 einen Antriebsabschnitt 67 auf. An dem Antriebsabschnitt 67 ist der Riegel 33 drehfest montiert. Hierfür ist ein Befestigungsabschnitt 69 des Riegels 33 formschlüssig mit dem Antriebsabschnitt 67 des Rotors 53 verbunden und mittels einer axial ausgerichteten Befestigungsschraube 71 an dem Antriebsabschnitt 67 fixiert.

Ausgehend von dem Antriebsabschnitt 67 des Rotors 53 ist der Riegel 33 in Richtung der Vorderseite 43 des Schließzylinders 31 abgewinkelt, sodass der Riegel 33 nicht nur bezüglich der Zylinderachse A in radialer Richtung über das Zylindergehäuse 51 übersteht, sondern sich auch in Richtung der Vorderseite 43 des Schließzylinders 31 erstreckt. Insgesamt ergibt sich somit eine abgewinkelte Form des Riegels 33 mit teilweise schrägem Verlauf bezüglich der Zylinderachse A, wobei der Riegel 33 mit geringem radialen Abstand entlang des Zylindergehäuses 51 und eng benachbart zu der Sicherungsmutter 61 bis auf Höhe des Deckels 23 bzw. des Wandabschnitts 35 des Aufbewahrungsfachs 15 verläuft, an dem der Riegel 33 seine Verriegelungsfunktion erfüllen soll.

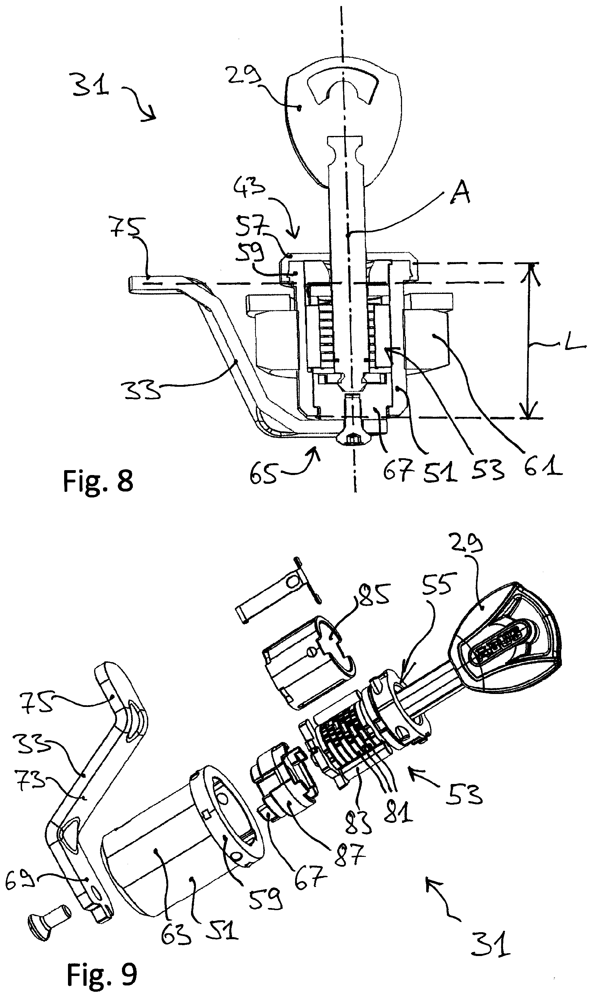

Bezogen auf die Längserstreckung L des Zylindergehäuses 51 entlang der Zylinderachse A kann der Riegel 33 ausgehend von dem Antriebsabschnitt 67 des Rotors 53 sich beispielsweise über ca. 85% der Längserstreckung L des Zylindergehäuses 51 in Richtung der Vorderseite 43 des Schließzylinders 31 erstrecken (Fig. 8). Hierdurch ragt der Riegel 33 ausgehend von dem Antriebsabschnitt 67 entlang der Zylinderachse A über die Sicherungsmutter 61 hinaus bis auf Höhe des Anschlagbunds 59 des Schließzylinders 31.

In Seitenansicht betrachtet ist der Riegel 33 gekröpft und weist ausgehend von dem Antriebsabschnitt 67 des Rotors 53 den Befestigungsabschnitt 69 auf, mit dem der Riegel 33 an dem Antriebsabschnitt 67 befestigt ist; ferner einen bezüglich der Zylinderachse A schräg verlaufenden Verbindungsabschnitt 73; und einen flachen Verriegelungsabschnitt 75, der sich zumindest im Wesentlichen senkrecht zu der Zylinderachse A erstreckt.

Durch diese Formgebung des Riegels 33 wird in der Umgebung des Schließzylinders 31 nur ein minimaler Bauraum für die Bewegungsbahn des Riegels 33 benötigt. Ferner kann durch eine derartige Ausgestaltung des Schließzylinders 31 erreicht werden, dass die Befestigungsebene des Schließzylinders 31 nahe seiner Vorderseite 43 liegt und der Schließzylinder 31 somit allenfalls geringfügig über die Befestigungsebene übersteht, wobei der Riegel 33 sich bis nahe der Befestigungsebene erstrecken kann, um dort in der Verriegelungsstellung einen benachbarten Wandabschnitt 35 des Aufbewahrungsfachs 15 hintergreifen zu können.

Um trotz der abgewinkelten Form des Riegels 33 eine hohe Stabilität insbesondere bezüglich axialer Belastungen im Falle eines gewaltsamen Öffnungsversuchs an dem Aufbewahrungsfach 15 bzw. dem Deckel 23 zu erzielen, weist der Riegel 33 zwischen dem Befestigungsabschnitt 69 und dem Verbindungsabschnitt 73 sowie zwischen dem Verbindungsabschnitt 73 und dem Verriegelungsabschnitt 75 eine jeweilige Versteifungssicke 77 auf.

Bei dem gezeigten Ausführungsbeispiel ist der Schließzylinder 31 als ein Scheibenzylinder ausgebildet (vgl. Fig. 9). Hierfür weist der Schließzylinder 31 entlang der Zylinderachse A mehrere um die Zylinderachse A drehbare Scheibenzuhaltungen 81 und einen parallel zur Zylinderachse A ausgerichteten und radial zur Zylinderachse A versetzbaren Sperrstift 83 auf. Die Scheibenzuhaltungen 81 sind axial eng benachbart zueinander innerhalb einer Rotorhülse 85 drehbar gelagert, die formschlüssig und somit drehfest mit einem Antriebsteil 87 verbunden ist, an welchem der Antriebsabschnitt 67 ausgebildet ist. Infolge dieser Ausgestaltung besitzt der Schließzylinder 31 eine lediglich geringe axiale Tiefe in Richtung des Aufbewahrungsfachs 15 hinein.

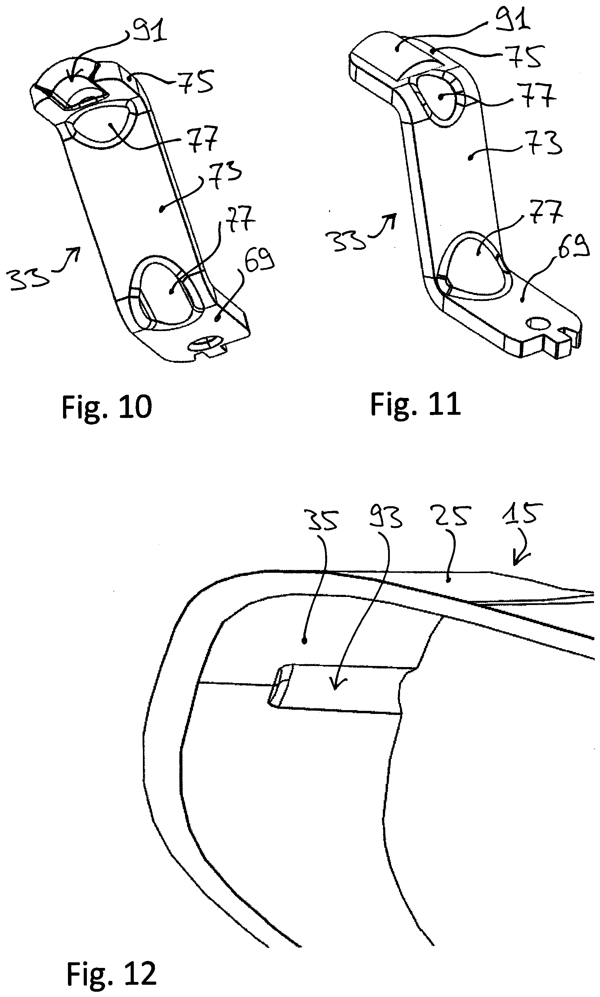

Anhand der Fig. 10 bis 13 wird nun eine vorteilhafte Weiterbildung des Schließzylinders 31 erläutert.

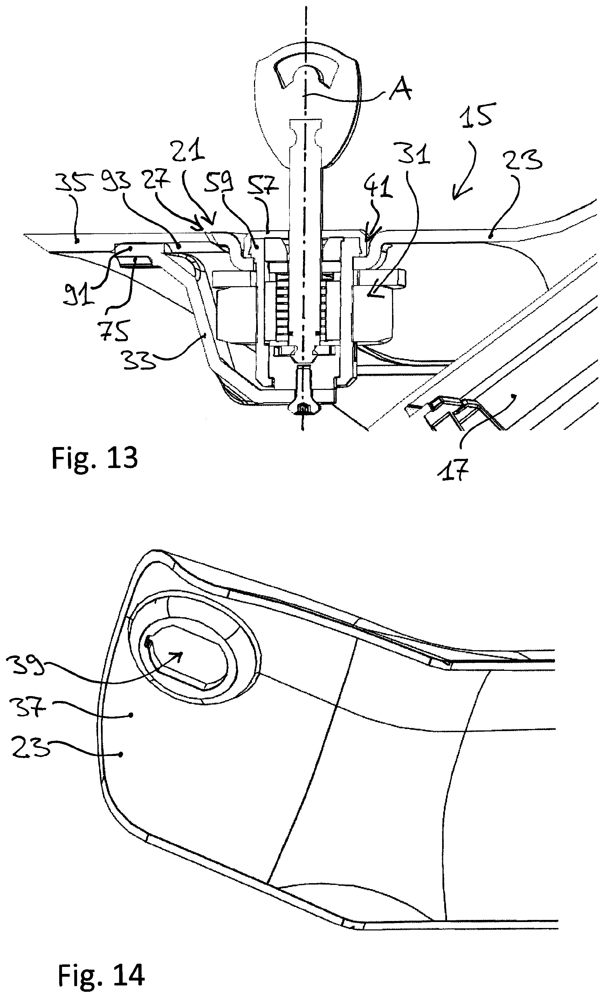

Bei dieser Ausführungsform weist der Riegel 33 an dem Verriegelungsabschnitt 75 eine Einrasterhebung 91 auf. Die Einrasterhebung 91 bildet eine in Richtung der Vorderseite 43 des Schließzylinders 31 konvexe Erhebung relativ zu einer Grundfläche des Verriegelungsabschnitts 75. Die Einrasterhebung 91 weist bei dem gezeigten Ausführungsbeispiel eine Längsform auf, die entlang einer radialen Richtung bezüglich der Zylinderachse A verläuft (Fig. 10 und 11). In der Verriegelungsstellung des Riegels 33 geht der Riegel 30 mittels der Einrasterhebung 91 einen Rastschluss mit einer komplementären Vertiefung 93 ein, die an der Innenseite des zu dem Deckel 23 benachbarten Wandabschnitts 35 des Aufbewahrungsfachs 15 ausgebildet ist (Fig. 12 und 13).

Somit gleitet der Riegel 33 bei Erreichen der Verriegelungsstellung in die Vertiefung 93 des Wandabschnitts 35 hinein, und der Benutzer kann bei der Betätigung des Schließzylinders 31 mittels des Schlüssels 29 das Erreichen der Verriegelungsstellung des Riegels 33 erspüren. Ferner kann der Riegel 33 somit in der Verriegelungsstellung mechanisch stabilisiert sein, wodurch in der sogenannten Null-Stellung des Schließzylinders 31, welche der Verriegelungsstellung des Riegels 33 entspricht, der Schlüssel 29 leichtgängig aus dem Schließzylinder 31 entnommen werden kann.

Der Riegel 33 kann infolge seiner abgewinkelten Form eine solche Eigenelastizität aufweisen, dass der Riegel 33 während des Entlangfahrens an der Innenseite des Wandabschnitts 35 des Aufbewahrungsfachs 15 eine zeitweilige Auslenkung erfährt und bei Erreichen der Verriegelungsstellung jedoch an der Vertiefung 93 kraftschlüssig einrastet.

Auch an der Innenseite des Deckels 23 kann für die Entriegelungsstellung des Riegels 33 eine der Vertiefung 93 entsprechende Vertiefung vorgesehen sein (nicht gezeigt).

Fig. 14 zeigt ergänzend den nicht-kreisrunden Querschnitt der Befestigungsöffnung 39 des Deckels 23, in welcher das Zylindergehäuse 51 mit den seitlichen Abflachungen 63 (Fig. 9) formschlüssig und somit drehfest aufgenommen kann.

### Bezugszeichenliste

- 11: Elektrofahrrad
- 13: Tretlager
- 15: Aufbewahrungsfach
- 17: Akkumulator
- 19: Rahmenabschnitt
- 21: Zugriffsöffnung
- 23: Deckel
- 25: Wand
- 27: Trennfuge
- 29: Schlüssel
- 31: Schließzylinder
- 33: Riegel
- 35: Wandabschnitt
- 37: Befestigungsabschnitt
- 39: Befestigungsöffnung
- 41: Vertiefung
- 43: Vorderseite des Schließzylinders
- 51: Zylindergehäuse
- 53: Rotor
- 55: Schlüsseleinführöffnung
- 57: Zylinderkappe
- 59: Anschlagbund
- 61: Sicherungsmutter
- 63: Abflachung
- 65: Rückseite des Schließzylinders
- 67: Antriebsabschnitt des Rotors
- 69: Befestigungsabschnitt des Riegels
- 71: Befestigungsschraube
- 73: Verbindungsabschnitt des Riegels
- 75: Verriegelungsabschnitt des Riegels
- 77: Versteifungssicke
- 81: Scheibenzuhaltung
- 83: Sperrstift
- 85: Rotorhülse
- 87: Antriebsteil
- 91: Einrasterhebung
- 93: Vertiefung des Wandabschnitts

- A: Zylinderachse
- L: Längserstreckung des Zylindergehäuses

## Patentansprüche

1. Verriegelbares Aufbewahrungsfach (15), insbesondere Batteriefach eines Elektrofahrrads (11),
mit einer Wand (25), die eine Zugriffsöffnung (21) aufweist, ferner mit einem beweglichen Deckel (23) zum Verschließen der Zugriffsöffnung (21), und mit einem Schließzylinder (31) zum Verriegeln eines Deckels (23), der an dem beweglichen Deckel (23) montiert ist,
wobei der Schließzylinder (31) ein Zylindergehäuse (51), einen Rotor (53) und einen einstückigen Riegel (33) aufweist,
wobei der Rotor (53) in dem Zylindergehäuse (51) um eine Zylinderachse (A) drehbar gelagert ist und an der Rückseite (65) des Schließzylinders (31) einen Antriebsabschnitt (67) aufweist,
wobei der Riegel (33) an dem Antriebsabschnitt (67) des Rotors (53) drehfest montiert ist und bezüglich der Zylinderachse (A) in radialer Richtung über das Zylindergehäuse (51) übersteht,
wobei der Riegel (33) ausgehend von dem Antriebsabschnitt (67) des Rotors (53) in Richtung der Vorderseite (43) des Schließzylinders (31) abgewinkelt ist,
wobei der Riegel (33) gekröpft ist und ausgehend von dem Antriebsabschnitt (67) des Rotors (53) einen Befestigungsabschnitt (69), mit dem der Riegel an dem Antriebsabschnitt befestigt ist; einen entlang der Zylinderachse (A) schräg verlaufenden Verbindungsabschnitt (73) und einen Verriegelungsabschnitt (75) aufweist,
wobei der Verriegelungsabschnitt (75) des Riegels (33) eine in Richtung der Vorderseite (43) des Schließzylinders weisende Erhebung aufweist,
**dadurch gekennzeichnet,**
**dass** der Verriegelungsabschnitt (75) des Riegels (33) eine Grundfläche aufweist, die sich senkrecht zu der Zylinderachse (A) erstreckt, wobei die Erhebung des Riegels (33) durch eine relativ zu der Grundfläche konvexe Einrasterhebung (91) gebildet ist, und
**dass** die Wand (25) des Aufbewahrungsfachs (15) an einer Innenseite des Aufbewahrungsfachs (15) eine zu der Einrasterhebung (91) des Riegels (33) komplementäre Vertiefung (93) aufweist für einen Eingriff mit dem Riegel (33) des Schließzylinders (31), wenn der Riegel (33) sich in einer Verriegelungsstellung befindet.

2. Verriegelbares Aufbewahrungsfach (15) nach Anspruch 1,
wobei das Zylindergehäuse (51) entlang der Zylinderachse (A) eine Längserstreckung (L) aufweist, wobei der Riegel (33) ausgehend von dem Antriebsabschnitt (67) des Rotors (53) über zumindest 60%, insbesondere über zumindest 70% oder 80%, der Längserstreckung (L) des Zylindergehäuses (51) in Richtung der Vorderseite (43) des Schließzylinders ragt.

3. Verriegelbares Aufbewahrungsfach (15) nach Anspruch 1 oder 2,
wobei der Schließzylinder an seiner Vorderseite (43) einen Anschlagbund (59) aufweist, welcher dazu ausgebildet ist, im montierten Zustand des Schließzylinders an einer Außenseite des Deckels (23) des Aufbewahrungsfachs (15) anzuliegen, und wobei der Schließzylinder ein Sicherungselement, insbesondere eine Sicherungsmutter (61) oder einen Sprengring, aufweist, welches dazu ausgebildet ist, im montierten Zustand des Schließzylinders an einer Innenseite des Deckels (23) des Aufbewahrungsfachs (15) anzuliegen, um den Schließzylinder an dem Deckel festzulegen, wobei der Riegel (33) ausgehend von dem Antriebsabschnitt (67) des Rotors (53) entlang der Zylinderachse (A) zumindest bis auf Höhe des Sicherungselements, insbesondere bis auf Höhe des Anschlagbunds (59) des Schließzylinders, ragt.

4. Verriegelbares Aufbewahrungsfach (15) einem der vorhergehenden Ansprüche,
wobei der Befestigungsabschnitt (69) des Riegels (33) zumindest in Drehrichtung formschlüssig mit dem Antriebsabschnitt (67) des Rotors (53) verbunden und mittels einer axial ausgerichteten Befestigungsschraube (71) an dem Antriebsabschnitt (67) fixiert ist.

5. Verriegelbares Aufbewahrungsfach (15) einem der vorhergehenden Ansprüche,
wobei der Riegel zwischen dem Befestigungsabschnitt (69) und dem Verbindungsabschnitt (73), und/oder zwischen dem Verbindungsabschnitt (73) und dem Verriegelungsabschnitt (75) eine Versteifungssicke (77) aufweist.

6. Verriegelbares Aufbewahrungsfach (15) einem der vorhergehenden Ansprüche,
wobei die Einrasterhebung (91) eine Längsform aufweist, die entlang einer radialen Richtung bezüglich der Zylinderachse (A) verläuft.

7. Verriegelbares Aufbewahrungsfach (15) nach einem der vorhergehenden Ansprüche,
wobei der Schließzylinder (31) ein Scheibenzylinder ist, der entlang der Zylinderachse (A) mehrere um die Zylinderachse drehbare Scheibenzuhaltungen (81) und einen parallel zur Zylinderachse ausgerichteten und radial zur Zylinderachse versetzbaren Sperrstift (83) aufweist, wobei jede Scheibenzuhaltung (81) eine zentrale Aufnahmeöffnung zur Aufnahme eines Schlüssels (29) und eine Umfangsausnehmung zur Aufnahme des Sperrstifts (83) aufweist.

8. Aufbewahrungsfach (15) nach einem der vorhergehenden Ansprüche, wobei an einer Außenseite des Aufbewahrungsfachs die Wand (25) und der Deckel (23) sich entlang einer Trennfuge (27) zwischen der Wand und dem Deckel koplanar zueinander erstrecken, wobei der Deckel (23) einen Befestigungsabschnitt (37) mit einer Befestigungsöffnung (39) aufweist, in welcher der Schließzylinder (31) aufgenommen ist, wobei der Befestigungsabschnitt (37) des Deckels (23) an der Befestigungsöffnung (39) gegenüber der gemeinsamen Erstreckungsebene von Wand und Deckel derart vertieft ist, dass die Vorderseite (43) des Schließzylinders (31) im Wesentlichen bündig zu der gemeinsamen Erstreckungsebene von Wand (25) und Deckel (23) angeordnet ist.

9. Elektrofahrrad (11) mit einem verriegelbaren Aufbewahrungsfach (15) nach einem der vorhergehenden Ansprüche.

## Claims

1. A lockable storage compartment (15), in particular a battery compartment of an electric bicycle (11),
having a wall (25) which has an access opening (21), further having a movable cover (23) for closing the access opening (21), and having a lock cylinder (31) for locking a cover (23) which is mounted at the movable cover (23),
wherein the lock cylinder (31) has a cylinder housing (51), a rotor (53) and a single-piece latch (33),
wherein the rotor (53) is rotatably supported about a cylinder axis (A) in the cylinder housing (51) and has a drive section (67) at the rear side (65) of the lock cylinder (31),
wherein the latch (33) is rotationally fixedly mounted at the drive section (67) of the rotor (53) and projects beyond the cylinder housing (51) in a radial direction with respect to the cylinder axis (A),
wherein the latch (33) is angled towards the front side (43) of the lock cylinder (31), starting from the drive section (67) of the rotor (53),
wherein the latch (33) is cranked and, starting from the drive section (67) of the rotor (53), has a fastening section (69) with which the latch is fastened to the drive section, a connection section (73) extending obliquely along the cylinder axis (A), and a locking section (75),
wherein the locking section (75) of the latch (33) has an elevated portion facing towards the front side (43) of the lock cylinder,
**characterized in that**
the locking section (75) of the latch (33) has a base surface which extends perpendicular to the cylinder axis (A), with the elevated portion of the latch (33) being formed by an elevated latching portion (91) which is convex relative to the base surface, and
**in that** the wall (25) of the storage compartment (15) has, at an inner side of the storage compartment (15), a recess (93), which is complementary to the elevated latching portion (91) of the latch (33), for an engagement with the latch (33) of the lock cylinder (31) when the latch (33) is in a locking position.

2. A lockable storage compartment (15) according to claim 1,
wherein the cylinder housing (51) has a longitudinal extent (L) along the cylinder axis (A), wherein the latch (33), starting from the drive section (67) of the rotor (53), projects over at least 60%, in particular over at least 70% or 80%, of the longitudinal extent (L) of the cylinder housing (51) towards the front side (43) of the lock cylinder.

3. A lockable storage compartment (15) according to claim 1 or 2,
wherein the lock cylinder has, at its front side (43), an abutment collar (59) which is configured to contact an outer side of the cover (23) of the storage compartment (15) in the assembled state of the lock cylinder, and wherein the lock cylinder has a securing element, in particular a securing nut (61) or a circlip, which is configured to contact an inner side of the cover (23) of the storage compartment (15) in the assembled state of the lock cylinder in order to fix the lock cylinder to the cover, wherein the latch (33), starting from the drive section (67) of the rotor (53), projects along the cylinder axis (A) at least up to the height of the securing element, in particular up to the height of the abutment collar (59) of the lock cylinder.

4. A lockable storage compartment (15) according to any one of the preceding claims,
wherein the fastening section (69) of the latch (33) is connected in a form-fitting manner to the drive section (67) of the rotor (53) at least in the direction of rotation and is fixed to the drive section (67) by means of an axially oriented fastening screw (71).

5. A lockable storage compartment (15) according to any of the preceding claims,
wherein the latch comprises a stiffening bead (77) between the fastening section (69) and the connection section (73) and/or between the connection section (73) and the locking section (75).

6. A lockable storage compartment (15) according to any one of the preceding claims,
wherein the elevated latching portion (91) has a longitudinal shape extending along a radial direction with respect to the cylinder axis (A).

7. A lockable storage compartment (15) according to any one of the preceding claims,
wherein the lock cylinder (31) is a disk cylinder which has a plurality of disk tumblers (81) along the cylinder axis (Z) that are rotatable about the cylinder axis (Z) and a blocking pin (83) aligned in parallel with the cylinder axis (Z) and displaceable radially to the cylinder axis (Z), wherein each disk tumbler (81) has a central reception opening (18) for receiving a key (29) and a peripheral cut-out (20) for receiving the blocking pin (83).

8. A storage compartment (15) according to any one of the preceding claims, wherein, at an outer side of the storage compartment, the wall (25) and the cover (23) extend coplanar to one another along a joint (27) between the wall and the cover, wherein the cover (23) has a fastening section (37) having a fastening opening (39) in which the lock cylinder (31) is received, wherein the fastening section (37) of the cover (23) is recessed at the fastening opening (39) with respect to the common plane of extent of the wall and the cover such that the front side (43) of the lock cylinder (31) is arranged substantially flush with the common plane of extent of the wall (25) and the cover (23).

9. An electric bicycle (11) comprising a lockable storage compartment (15) according to any one of the preceding claims.

## Revendications

1. Compartiment de rangement verrouillable (15), en particulier compartiment à batterie d'une bicyclette électrique (11),
comprenant une paroi (25) qui présente une ouverture d'accès (21), comprenant en outre un couvercle mobile (23) pour fermer l'ouverture d'accès (21), et un cylindre de fermeture (31) destiné à verrouiller un couvercle (23) et monté sur le couvercle mobile (23),
dans lequel
le cylindre de fermeture (31) comprend un boîtier de cylindre (51), un rotor (53) et un verrou monobloc (33),
le rotor (53) est monté dans le boîtier de cylindre (51) de manière à pouvoir tourner autour d'un axe de cylindre (A) et présente une portion d'entraînement (67) sur la face arrière (65) du cylindre de fermeture (31),
le verrou (33) est monté solidairement en rotation sur la portion d'entraînement (67) du rotor (53) et dépasse du boîtier de cylindre (51) dans la direction radiale par rapport à l'axe de cylindre (A),
le verrou (33) fait un angle à partir de la portion d'entraînement (67) du rotor (53) en direction de la face avant (43) du cylindre de fermeture (31),
le verrou (33) est coudé et présente, en partant de la portion d'entraînement (67) du rotor (53), une portion de fixation (69) par laquelle le verrou est fixé à la portion d'entraînement ; une portion de liaison (73) s'étendant en oblique le long de l'axe de cylindre (A), et une portion de verrouillage (75),
la portion de verrouillage (75) du verrou (33) présente une surélévation dirigée vers la face avant (43) du cylindre de fermeture,
**caractérisé en ce que**
la portion de verrouillage (75) du verrou (33) présente une surface de base qui s'étend perpendiculairement à l'axe de cylindre (A), la surélévation du verrou (33) étant formée par une surélévation d'enclenchement (91) convexe par rapport à la surface de base, et
**en ce que** la paroi (25) du compartiment de rangement (15) présente, sur un côté intérieur du compartiment de rangement (15), un creux (93) complémentaire à la surélévation d'enclenchement (91) du verrou (33) pour l'engagement avec le verrou (33) du cylindre de fermeture (31) lorsque le verrou (33) se trouve dans une position de verrouillage.

2. Compartiment de rangement verrouillable (15) selon la revendication 1, dans lequel le boîtier de cylindre (51) présente une extension longitudinale (L) le long de l'axe de cylindre (A), et le verrou (33), partant de la portion d'entraînement (67) du rotor (53), fait saillie en direction de la face avant (43) du cylindre de fermeture sur au moins 60 %, en particulier sur au moins 70 % ou 80 %, de l'extension longitudinale (L) du boîtier de cylindre (51).

3. Compartiment de rangement verrouillable (15) selon la revendication 1 ou 2,
dans lequel le cylindre de fermeture présente sur sa face avant (43) une collerette de butée (59) conçue pour s'appliquer, à l'état monté du cylindre de fermeture, contre une face extérieure du couvercle (23) du compartiment de rangement (15), et le cylindre de fermeture présente un élément de blocage, en particulier un écrou de blocage (61) ou un jonc d'arrêt, qui est conçu pour, à l'état monté du cylindre de fermeture, s'appliquer contre une face intérieure du couvercle (23) du compartiment de rangement (15), afin de fixer le cylindre de fermeture sur le couvercle, et le verrou (33), partant de la portion d'entraînement (67) du rotor (53), fait saillie le long de l'axe de cylindre (A) au moins jusqu'à la hauteur de l'élément de blocage, en particulier jusqu'à la hauteur de la collerette de butée (59) du cylindre de fermeture.

4. Compartiment de rangement verrouillable (15) selon l'une des revendications précédentes,
dans lequel la portion de fixation (69) du verrou (33) est reliée à la portion d'entraînement (67) du rotor (53) par complémentarité de formes au moins dans la direction de rotation et est fixée à la portion d'entraînement (67) au moyen d'une vis de fixation (71) orientée axialement.

5. Compartiment de rangement verrouillable (15) selon l'une des revendications précédentes,
dans lequel le verrou présente une moulure de rigidification (77) entre la portion de fixation (69) et la portion de liaison (73) et/ou entre la portion de liaison (73) et la portion de verrouillage (75).

6. Compartiment de rangement verrouillable (15) selon l'une des revendications précédentes,
dans lequel la surélévation d'enclenchement (91) présente une forme longitudinale s'étendant selon une direction radiale par rapport à l'axe de cylindre (A).

7. Compartiment de rangement verrouillable (15) selon l'une des revendications précédentes,
dans lequel le cylindre de fermeture (31) est un cylindre à disques comprenant, le long de l'axe de cylindre (A), plusieurs gâchettes en disques (81) qui peuvent tourner autour de l'axe de cylindre et une goupille d'arrêt (83) qui est orientée parallèlement à l'axe de cylindre et qui peut être déplacée radialement par rapport à l'axe de cylindre, chaque gâchette en disque (81) présentant une ouverture de réception centrale pour recevoir une clé (29) et un évidement périphérique pour recevoir la goupille d'arrêt (83).

8. Compartiment de rangement (15) selon l'une des revendications précédentes,
dans lequel, sur une face extérieure du compartiment de rangement, la paroi (25) et le couvercle (23) s'étendent de manière coplanaire l'un par rapport à l'autre le long d'un joint de séparation (27) entre la paroi et le couvercle, le couvercle (23) comprend une portion de fixation (37) avec une ouverture de fixation (39) dans laquelle le cylindre de fermeture (31) est reçu, la portion de fixation (37) du couvercle (23) est creusée au niveau de l'ouverture de fixation (39) par rapport au plan d'extension commun de la paroi et du couvercle de telle sorte que la face avant (43) du cylindre de fermeture (31) est disposée sensiblement à fleur du plan d'extension commun de la paroi (25) et du couvercle (23).

9. Bicyclette électrique (11) comprenant un compartiment de rangement verrouillable (15) selon l'une des revendications précédentes.
